(19) Europäisches Patentamt
European Patent Office
Office européen des brevets

(11) EP 1 317 178 B1

(12) EUROPEAN PATENT SPECIFICATION

(45) Date of publication and mention of the grant of the patent:
**12.05.2004 Bulletin 2004/20**

(21) Application number: **01980366.7**

(22) Date of filing: **10.09.2001**

(51) Int Cl.[7]: **A01N 41/06**
// (A01N41/06, 47:34, 47:32, 47:14, 43:84, 43:828, 43:54, 43:50, 43:40, 43:36, 37:50, 37:46), A01N37:34

(86) International application number:
**PCT/EP2001/010446**

(87) International publication number:
**WO 2002/021918 (21.03.2002 Gazette 2002/12)**

# (54) FUNGICIDAL COMPOSITIONS

FUNGIZIDE ZUSAMMENSETZUNGEN

COMPOSITIONS FONGICIDES

(84) Designated Contracting States:
**AT BE CH CY DE DK ES FI FR GB GR IE IT LI LU MC NL PT SE TR**

(30) Priority: **12.09.2000 GB 0022338**

(43) Date of publication of application:
**11.06.2003 Bulletin 2003/24**

(73) Proprietor: **Syngenta Participations AG**
**4058 Basel (CH)**

(72) Inventors:
- **NUNINGER, Cosima**
**4058 Basel (CH)**
- **ZELLER, Martin Syngenta Crop Protection-**
**CH-4333 Muenchwilen (CH)**

(74) Representative: **Weichsel, Christian Henner et al**
**Syngenta Participations AG**
**Intellectual Property**
**P.O. Box**
**4002 Basel (CH)**

(56) References cited:
**WO-A-00/32569**
**WO-A-00/41998**
**WO-A-95/30651**
**WO-A-98/38161**
**WO-A-99/07674**
**WO-A-99/43644**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to novel fungicidal compositions for the treatment of phytopathogenic diseases of crop plants, especially phytopathogenic fungi, and to a method of combating phytopathogenic diseases on crop plants.

It is known that certain sulfonyl-valine-amide derivatives have biological activity against phytopathogenic fungi, e.g. known from WO 95/30651 and WO 99/07647 where their properties and methods of preparation are described. On the other hand various fungicidal compounds of different chemical classes are widely known as plant fungicides for application in various crops of cultivated plants. However, crop tolerance and activity against phytopathogenic plant fungi do not always satisfy the needs of agricultural practice in many incidents and aspects.

It has now been found that the use of

A) a N-sulfonyl-valine-amide of formula I

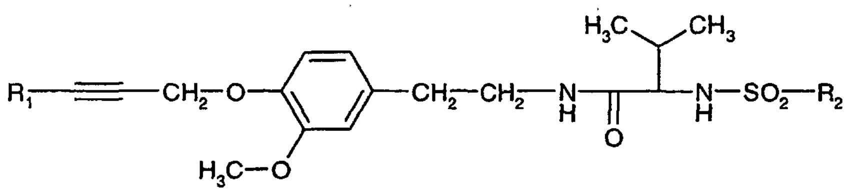 ( I )

wherein

$R_1$ is hydrogen, $C_{1-4}$alkyl, $C_{3-6}$cycloalkyl or halophenyl, and

$R_2$ is $C_{1-4}$alkyl; in association with

B) either

metalaxyl of formula II , including metalaxyl-M of formula IIa

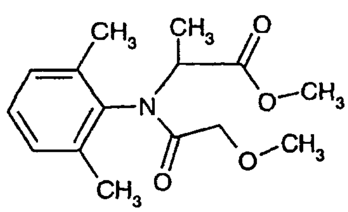 ( II ) , 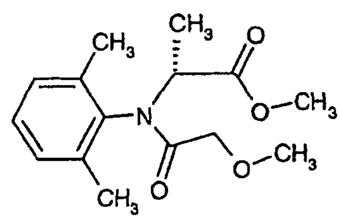 ( IIa) ,

or

fluazinam of formula III

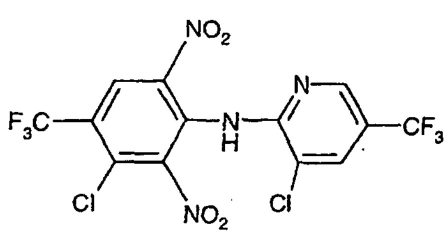 (III) ,

or

mancozeb of formula IV

$$[\text{-SCSNHCH}_2\text{CH}_2\text{NHCSSMn-}]_x[\text{Zn}]_y \quad \text{(IV)},$$

or
chlorothalonil of formula V

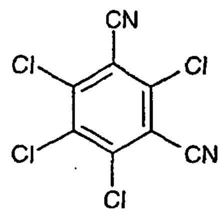

(V),

or
a strobilurin of the formula VI

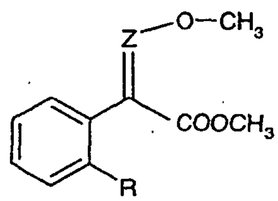

(VI)

wherein Z is CH or N and R is

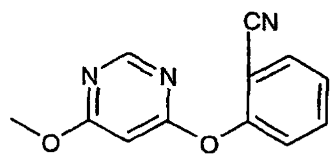

,

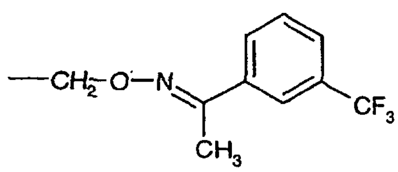

or

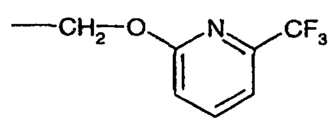

,

especially of the
strobilurins of formulae VIa, VIb or VIc

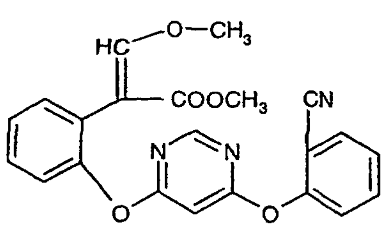

(VIa) azoxystrobin

,

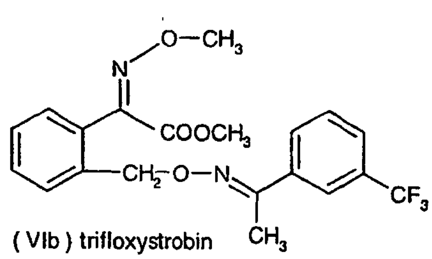

(VIb) trifloxystrobin

,

and

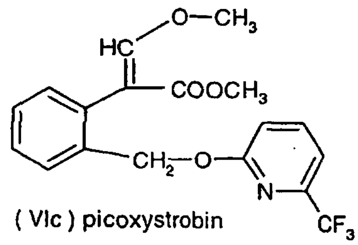

( VIc ) picoxystrobin ,

or the compound pyraclostrobin (BAS 500F) of the formula VII

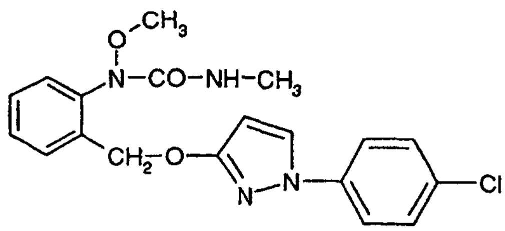

( VII ) ,

or acibenzolar-S-methyl of the formula VIII

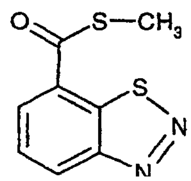

( VIII ) ,

or dimethomorph of the formula IX

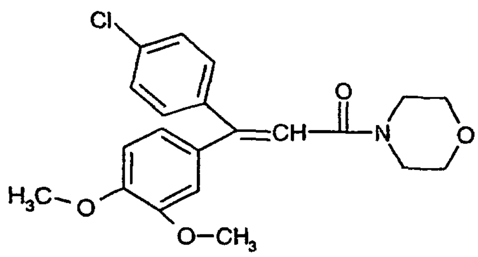

( IX ) ,

or fludioxonil of formula X

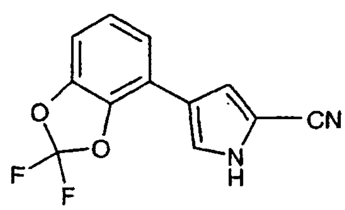

( X ) ,

, or cymoxanil of the formula XI

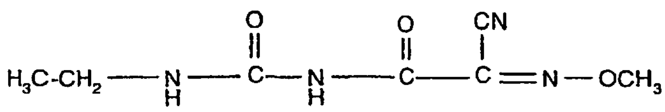 ( XI ) ,

or imazalil of the formula XII, including S-imazalil of formula XIIa

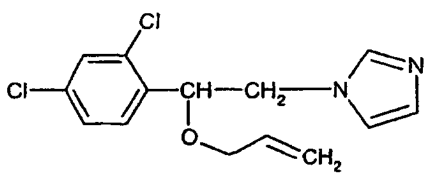 ( XII ) , 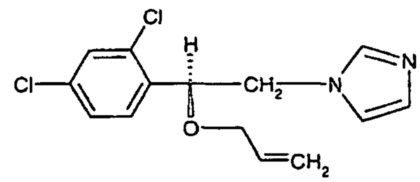 ( XIIa )

is particularly effective in combating or preventing fungal diseases of crop plants. These combinations exhibit synergistic fungicidal activity.

Throughout this document the expression combination stands for the various combinations of components A) and B) , e.g. in a single "ready-mix" form, in a combined spray mixture composed from separate formulations of the single active ingredient components, e.g. a "tank-mix", and in a combined use of the single active ingredients when applied in a sequential manner, i.e. one after the other with a reasonably short period, e.g. a few hours or days. The order of applying the components A) and B) is not essential for working the present invention.

The combinations according to the invention may also comprise more than one of the active components B) , if broadening of the spectrum of disease control is desired. For instance, it may be advantageous in the agricultural practice to combine two or three components B) with the any of the compounds of formula I, or with any preferred member of the group of compounds of formula I.

From WO 95/30651 and WO 99/07647 the following specific species of formula I are known:

| Compound No. | $R_1$ | $R_2$ |
|---|---|---|
| I.01 | H | $C_2H_5$ |
| I.02 | H | $CH_3$ |
| I.03 | $CH_3$ | $CH_3$ |
| I.04 | $CH_3$ | $C_2H_5$ |
| I.05 | $C_2H_5$ | $C_2H_5$ |
| I.06 | $C_2H_5$ | $CH_3$ |
| I.07 | $C_3H_5$-cycl | $CH_3$ |
| I.08 | $C_3H_5$-cycl | $C_2H_5$ |
| I.09 | $C_5H_9$-cycl | $CH_3$ |
| I.10 | $C_6H_{11}$-cycl | $CH_3$ |
| I.11 | 3-Cl-$C_6H_5$ | $C_2H_5$ |
| I.12 | 3-Cl-$C_6H_5$ | $CH_3$ |
| I.13 | 4-Cl-$C_6H_5$ | $C_2H_5$ |
| I.14 | 4-Cl-$C_6H_5$ | $CH_3$ |
| I.15 | 3-Br-$C_6H_5$ | $C_2H_5$ |
| I.16 | 3-Br-$C_6H_5$ | $CH_3$ |
| I.17 | 4-Br-$C_6H_5$ | $C_2H_5$ |
| I.18 | 4-Br-$C_6H_5$ | $CH_3$ |
| I.19 | 4-Cl-$C_6H_5$ | $C_3H_7$-n |

(continued)

| Compound No. | $R_1$ | $R_2$ |
|---|---|---|
| I.20 | 4-Cl-$C_6H_5$ | $C_3H_7$-i |
| I.21 | 4-Cl-$C_6H_5$ | $C_4H_9$-n |
| I.22 | 4-Cl-$C_6H_5$ | $C_4H_9$-s |

A preferred embodiment of the present invention is represented by those combinations which comprise as component A) a compound of the formula I wherein $R_1$ is hydrogen, methyl, ethyl, chlorophenyl or bromophenyl, or wherein $R_1$ is hydrogen, ethyl, 4-chlorophenyl or 4-bromophenyl, or wherein $R_1$ is 4-chlorophenyl, or wherein $R_2$ is methyl or ethyl, or wherein $R_2$ is methyl. A preferred subgroup is characterized by $R_1$ being hydrogen, ethyl, 4-chlorophenyl or 4-bromophenyl, and $R_2$ being methyl or ethyl. In another preferred subgroup $R_1$ is 4-chlorophenyl and $R_2$ is methyl or ethyl.

Among the mixtures of present invention most preference is given to the mixtures of compounds I.01, I.11, I.12, I.13, I.14, I.15, I.17, I.19, I.20, I.21, and I.22 with the compounds of component B), especially with the commercially available products falling within the given ranges, i.e. the commercial products mentioned throughout this document. Particular preference is given to the combination of compound I.13 with any of the components B), to the combination of compound I.14 with any of the components B), to the combination of compound I.15 with any of the components b), to the combination of compound I.17 with any of the components B), to the combination of compound I.19 with any of the components B), to the combination of compound 1.20 with any of the components B), to the combination of compound 1.21 with any of the components B), and to the combination of compound 1.22 with any of the components B).

Salts of the amine and morpholine active ingredients are prepared by reaction with acids, e.g., hydrohalo acids such as hydrofluoric acid, hydrochloric acid, hydrobromic acid and hydroiodic acid, or sulfuric acid, phosphoric acid or nitric acid, or organic acids such as acetic acid, trifluoroacetic acid, trichloroacetic acid, propionic acid, glycolic acid, lactic acid, succinic acid, citric acid, benzoic acid, cinnamic acid, oxalic acid, formic acid, benzenesulfonic acid, p-toluenesulfonic acid, methanesulfonic acid, salicylic acid, p-aminosalicylic acid and 1,2-naphtalenedisulfonic acid.

The active ingredient combinations are effective against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Puccinia); Fungi imperfecti (also known as Deuteromycetes; e.g. Botrytis, Helminthosporium, Rhynchosporium, Fusarium, Septoria, Cercospora, Alternaria, Pyricularia and Pseudocercosporella herpotrichoides); Oomycetes (e.g. Phytophthora, Peronospora, Pseudoperonospora, Albugo, Bremia, Pythium, Pseudosclerospora, Plasmopara).

Target crops for the areas of indication disclosed herein comprise within the scope of this invention e.g. the following species of plants: beet (sugar beet and fodder beet); pomes, stone fruit and soft fruit (apples, pears, plums, peaches, almonds, cherries, strawberries, raspberries and blackberries); leguminous plants (beans, lentils, peas, soybeans); oil plants (rape, mustard, poppy, olives, sunflowers, coconut, castor oil plants, cocoa beans, groundnuts); cucumber plants (marrows, cucumbers, melons); fibre plants (cotton, flax, hemp, jute); citrus fruit (oranges, lemons, grapefruit, mandarins); vegetables (spinach, lettuce, asparagus, cabbages, carrots, onions, tomatoes, potatoes, paprika); lauraceae (avocados, cinnamon, camphor); or plants such as maize, tobacco, nuts, coffee, sugar cane, tea, vines, hops, durian, bananas and natural rubber plants, as well as turf and ornamentals (flowers, shrubs, broad-leaved trees and evergreens, such as conifers). This list does not represent any limitation. Crops of elevated interest in connection with present invention are potatoes, tomatoes, grapes, tobacco, and other vegetables, like cucurbits and lettuce.

The combinations of the present invention may also be used in the area of protecting technical material against attack of fungi. Technical areas include wood, paper, leather, constructions, cooling and heating systems, ventilation and air conditioning systems, and the like. The combinations according the present invention can prevent the disadvantageous effects such as decay, discoloration or mold.

The combinations according to the present invention are particularly effective against downy mildews and late blights, in particular against pathogens of grapes, potatoes, tomatoes, cucurbits and tobacco. They are furthermore particularly effective against leafspot species and early blights; especially against Altemaria in potatoes, tomatoes, cucurbits, and black rot, red fire, powdery mildew, grey mold and dead arm disease in vine.

The amount of combination of the invention to be applied, will depend on various factors such as the compound employed, the subject of the treatment (plant, soil, seed), the type of treatment (e.g. spraying, dusting, seed dressing), the purpose of the treatment (prophylactic or therapeutic), the type of fungi to be treated and the application time.

The compounds formula II and IIa are commonly known as metalaxyl and metalaxyl-M, c.f. The Pesticide Manual, 11th Ed., 1997, entries 470 and 471.

The compound of formula III is commonly known as fluazinam, c.f. The Pesticide Manual, 11th Ed., 1997,

entry 329.

The compound of formula IV is commonly known as mancozeb, c.f. The Pesticide Manual, 11 th Ed., 1997, entry 452.

The compound of formula V is commonly known as chlorothalonil, c.f. The Pesticide Manual, 11th Ed., 1997, entry 133.

The preferred compounds of formula VI are commonly known as azoxystrobin VIa, trifloxystrobin VIb, and picoxystrobin VIc, c.f. The Pesticide Manual, 11 th Ed., 1997, entry 43, European Patent EP-B-460575, and European Patent document EP-A-278595 or AGROW, No. 324, page 27 , 12-March-1999.

The compound of formula VII is commonly known as pyraclostrobin (BAS 500F) , c.f. WO 96/01256.

The compound of formula VIII is commonly known as acibenzolar-S-methyl, c.f. The Pesticide Manual, 11 th Ed., 1997, entry 114.

The compound of formula IX is commonly known as dimethomorph, c.f. The Pesticide Manual, 11th Ed., 1997, entry 244.

The compound of formula X is commonly known as fludioxonil, c.f. The Pesticide Manual, 11 th Ed., 1997, entry 334.

The compound of formula XI is commonly known as cymoxanil, c.f. The Pesticide Manual, 11 th Ed., 1997, entry 182.

The compound of formula XII is commonly known as imazalil, c.f. Pesticide Manual 11 th Ed, 1997, entry 410 , and its pure optical S-isomer of formula XIIa is commonly known as S-imazalil, c.f. PCT WO 00/38521.

The specific compounds of component B) mentioned in the preceding paragraphs are commercially available. Other compounds falling under the scope of formula VI of component B) are obtainable according to procedures analogous to those known for preparing the commercially available compounds.

It has been found that the use of compounds of formulae II to XII in combination with the compound of formula I surprisingly and substantially enhance the effectiveness of the latter against fungi, and vice versa. Additionally, the method of the invention is effective against a wider spectrum of such fungi that can be combated with the active ingredients of this method, when used solely.

Specific preferred mixtures according to the present invention are understood to be represented by the combinations of active ingredients of formula I, or any of the subgroups of formula I, or specifically mentioned members of the subgroups with a second fungicide selected from the group comprising acibenzolar-S-methyl, azoxystrobin, chlorothalonil, cymoxanil, dimethomorph, fluazinam, fludioxonil, imazalil, S-imazalil, mancozeb, metalaxyl, metalaxyl-M, picoxystrobin, pyraclostrobin (BAS 500F), and trifloxystrobin.

Further preferred as second fungicide of component B) are metalaxyl and metalaxyl-M.

The weight ratio of A):B) is so selected as to give a synergistic fungicidal action. In general the weight ratio of A) : B) is between 2000 : 1 and 1 : 1000.

The synergistic action of the composition is apparent from the fact that the fungicidal action of the composition of A) + B) is greater than the sum of the fungicidal actions of A) and B).

Where the component B) is metalaxyl of formula II the weight ratio of A):B) is for example between 40 : 1 and 1 : 400, especially 20 : 1 and 1 : 100, and more preferably 10 : 1 and 1 : 20.

Where the component B) is metalaxyl-M of formula IIa the weight ratio of A):B) is for example between 80 : 1 and 1 : 200, especially 40 : 1 and 1 : 50, and more preferably 20 : 1 and 1 : 20.

Where the component B) is fluazinam of formula III the weight ratio of A):B) is for example between 40 : 1 and 1 : 100, especially 20 : 1 and 1 : 50, and more preferably 20 : 1 and 1 : 10.

Where the component B) is mancozeb of formula IV the weight ratio of A):B) is for example between 4 : 1 and 1 : 600, especially 1 : 1 and 1 : 100, and more preferably 1 : 4 and 1 : 20.

Where the component B) is chlorothalonil of formula V the weight ratio of A):B) is for example between 4 : 1 and 1 : 400, especially 1 : 1 and 1 : 100, and more preferably 1 : 4 and 1 : 20.

Where the component B) is azoxystrobin of formula VIa the weight ratio of A):B) is for example between 40 : 1 and 1 : 200, especially 20 : 1 and 1 : 100, and more preferably 10 : 1 and 1 : 20.

Where the component B) is trifloxystrobin of formula VIb the weight ratio of A):B) is for example between 40 : 1 and 1 : 200, especially 20 : 1 and 1 : 100, and more preferably 10 : 1 and 1 : 20.

Where the component B) is picoxystrobin of formula VIc the weight ratio of A):B) is for example between 80 : 1 and 1 : 200, especially 40 : 1 and 1 : 100, and more preferably 20 : 1 and 1 : 20.

Where the component B) is pyraclostrobin (BAS 500F) of formula VII the weight ratio of A):B) is for example between 80 : 1 and 1 : 200, especially 40 : 1 and 1 : 100, and more preferably 20 : 1 and 1 : 20.

Where the component B) is acibenzolar-S-methyl of formula VIII the weight ratio of A):B) is example between 2000 : 1 and 1 : 8, especially 1000 : 1 and 1 : 1, and more preferably 500 : 1 and 10 : 1.

Where the component B) is dimethomorph of formula IX the weight ratio of A):B) is for example between 40 : 1 and 1 : 200, especially 20 : 1 and 1 : 100, and more preferably 10 : 1 and 1 : 20.

Where the component B) is fludioxonil of formula X the weight ratio of A):B) is for example between 80 : 1 and 1 : 100, especially 40 : 1 and 1 : 50, and more preferably 10: 1 and 1 : 20.

Where the component B) is cymoxanil of formula XI the weight ratio of A):B) is for example between 40 : 1 and 1 : 100, especially 20 : 1 and 1 : 50, and more preferably 20 : 1 and 1 :10.

Where the component B) is imazalil of formula XII or its isomer S-imazalil of formula XIIa the weight ratio of A):B) is for example between 1 : 400 and 400 : 1 , especially 1 : 200 and 200: 1, and more preferably 1 : 20 and 20 : 1 ; resp. 1 : 200 and 200 : 1 , especially 1 : 100 and 100: 1, and more preferably 1 : 10 and 10 : 1.

The method of the invention comprises applying to the treated plants or the locus thereof in admixture or separately, a fungicidally effective aggregate amount of a compound of formula I and a compound of component B).

The term locus as used herein is intended to embrace the fields on which the treated crop plants are growing, or where the seeds of cultivated plants are sown, or the place where the seed will be placed into the soil. The term seed is intended to embrace plant propagating material such as cuttings, seedlings, seeds, germinated or soaked seeds.

The novel combinations are extremely effective on a broad spectrum of phytopathogenic fungi, in particular from the Ascomycetes , Basidiomycetes and Oomycetes classes. Some of them have a systemic action and can be used as foliar and soil fungicides.

The fungicidal combinations are of particular interest for controlling a large number of fungi in various crops or their seeds, especially in field crops such as potatoes, tobacco and sugarbeets, and wheat, rye, barley, oats, rice, maize, lawns, cotton, soybeans, coffee, sugarcane, fruit and ornamentals in horticulture and viticulture, in vegetables such as cucumbers, beans and cucurbits.

The combinations are applied by treating the fungi or the seeds, plants or materials threatened by fungus attack, or the soil with a fungicidally effective amount of the active ingredients.

The agents may be applied before or after infection of the materials, plants or seeds by the fungi.

The novel combinations are particularly useful for controlling the following plant diseases:

Alternaria species in fruit and vegetables,
Botrytis cinerea (gray mold) in strawberries, tomatoes and grapes,
Bremia lactucae in lettuce,
Cercospora arachidicola in groundnuts,
Colletotrichum musae on banana
Erysiphe cichoracearum and Sphaerotheca fuliginea in cucurbits,
Fusarium and Verticillium species in various plants, etc.
Fusarium moniliforme on banana
Fusarium pallidoroseum on banana
Monilinia fructigena on apples
Penicillium digitatum on citrus
Penicillium expansum on apples
Penicillium italicum on citrus
Peronospora tabacina in tobacco,
Phyctaena vagabunda on apples
Phytophthora infestans in potatoes and tomatoes,
Plasmopara viticola in grapes,
Pseudoperonospora cubensis in cucurbits,
Pyricularia oryzae in rice,
Pythium spp. in turf, ornamentals and cotton,
Rhizoctonia species in cotton, rice and lawns,
Uncinula necator, Guignardia bidwellii and Phomopsis viticola in vines,
Verticillium theobromae on banana

When applied to the plants the compound of formula I is applied at a rate of 5 to 2000 g a.i./ha, particularly 10 to 1000 g a.i./ha, e.g. 50, 75, 100 or 200 g a.i./ha, in association with 1 to 5000 g a.i./ha, particularly 2 to 2000 g a.i./ha, e.g. 100, 250, 500, 800, 1000, 1500 g a.i./ha of a compound of component B), depending on the class of chemical employed as component B).

Where the component B) is metalaxyl of formula II for example 50 to 2000 g a.i./ha is applied in association with the compound of formula I.

Where the component B) is metalaxyl-M of formula IIa for example 25 to 1000 g a.i./ha is applied in association with the compound of formula I.

Where the component B) is fluazinam of formula III for example 50 to 500 g a.i./ha is applied in association

with the compound of formula I.

Where the component B) is mancozeb of formula IV for example 500 to 3000 g a.i./ha is applied in association with the compound of formula I.

Where the component B) is chlorothalonil of formula V for example 500 to 2000 g a.i./ha is applied in association with the compound of formula I.

Where the component B) is azoxystrobin of formula VIa for example 50 to 1000 g a.i./ha is applied in association with the compound of formula I.

Where the component B) is trifloxystrobin of formula VIb for example 50 to 1000 g a.i./ha is applied in association with the compound of formula I.

Where the component B) is picoxystrobin of formula VIc for example 25 to 1000 g a.i./ha is applied in association with the compound of formula I.

Where the component B) is pyraclostrobin (BAS 500F) of formula VII for example 25 to 1000 g a.i./ha is applied in association with the compound of formula I.

Where the component B) is acibenzolar-S-methyl of formula VIII for example 1 to 40 g a.i./ha is applied in association with the compound of formula I.

Where the component B) is dimethomorph of formula IX for example 50 to 1000 g a.i./ha is applied in association with the compound of formula I.

Where the component B) is fludioxonil of formula X for example 25 to 500 g a.i./ha is applied in association with the compound of formula I.

Where the component B) is cymoxanil of formula XI for example 25 to 500 g a.i./ha is applied in association with the compound of formula I.

Where the component B) is imazalil or its isomer S-imazalil of formula XII for example 5 to 2000 g a.i./ha of the racemate, resp. 3 to 1000 g a.i./ha of the S-isomer XIIa, is applied in association with the compound of formula I.

In agricultural practice the application rates of the combination depend on the type of effect desired, and range from 0.02 to 4 kg of active ingredient per hectare.

When the active ingredients are used for treating seed, rates of 0.001 to 50 g a.i. per kg, and preferably from 0.01 to 10g per kg of seed are generally sufficient.

The invention also provides fungicidal compositions comprising a compound of formula I and a compound of component B).

The composition of the invention may be employed in any conventional form, for example in the form of a twin pack, an instant granulate, a flowable formulation, an emulsion concentrate or a wettable powder in combination with agriculturally acceptable adjuvants. Such compositions may be produced in conventional manner, e.g. by mixing the active ingredients with appropriate adjuvants (diluents or solvents and optionally other formulating ingredients such as surfactants). Also conventional slow release formulations may be employed where long lasting efficacy is intended. Particularly formulations to be applied in spraying forms such as water dispersible concentrates or wettable powders may contain surfactants such as wetting and dispersing agents, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

A seed dressing formulation is applied in a manner known per se to the seeds employing the combination of the invention and a diluent in suitable seed dressing formulation form, e.g. as an aqueous suspension or in a dry powder form having good adherence to the seeds. Such seed dressing formulations are known in the art. Seed dressing formulations may contain the single active ingredients or the combination of active ingredients in encapsulated form, e.g. as slow release capsules or microcapsules.

In general, the formulations include from 0.01 to 90% by weight of active agent, from 0 to 20% agriculturally acceptable surfactant and 10 to 99.99% solid or liquid adjuvant(s), the active agent consisting of at least the compound of formula I together with a compound of component B), and optionally other active agents, particularly microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ dilute formulations.

The Examples which follow serve to illustrate the invention, "active ingredient" denoting a mixture of compound I and a compound of component B) in a specific mixing ratio.

Formulation Examples

| Wettable powders | a) | b) | c) |
|---|---|---|---|
| active ingredient [I : comp B) = 1:3(a), 1:2(b), 1:1(c)] | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| kaolin | 62 % | 27 % | - |

The active ingredient is thoroughly mixed with the adjuvants and the mixture is thoroughly ground in a suitable mill, affording wettable powders which can be diluted with water to give suspensions of the desired concentration.

| Emulsifiable concentrate | |
|---|---|
| active ingredient (I : comp B) = 1:6) | 10 % |
| octylphenol polyethylene glycol ether (4-5 mol of ethylene oxide) | 3 % |
| calcium dodecylbenzenesulfonate | 3 % |
| castor oil polyglycol ether (35 mol of ethylene oxide) | 4 % |
| cyclohexanone | 30 % |
| xylene mixture | 50 % |

Emulsions of any required dilution, which can be used in plant protection, can be obtained from this concentrate by dilution with water.

| Dusts | a) | b) | c) |
|---|---|---|---|
| active ingredient [I : comp B) = 1:6(a), 1:2(b), 1:10(c)] | 5 % | 6 % | 4 % |
| talcum | 95 % | - | - |
| kaolin | - | 94 % | - |
| mineral filler | - | - | 96 % |

Ready-for-use dusts are obtained by mixing the active ingredient with the carrier and grinding the mixture in a suitable mill. Such powders can also be used for dry dressings for seed.

| Extruder granules | |
|---|---|
| active ingredient (I : comp B) = 2:1) | 15 % |
| sodium lignosulfonate | 2 % |
| carboxymethylcellulose | 1 % |
| kaolin | 82 % |

The active ingredient is mixed and ground with the adjuvants, and the mixture is moistened with water. The mixture is extruded and then dried in a stream of air.

| Coated granules | |
|---|---|
| active ingredient (I :comp B) = 1:10) | 8 % |
| polyethylene glycol (mol. wt. 200) | 3 % |
| kaolin | 89 % |

The finely ground active ingredient is uniformly applied, in a mixer, to the kaolin moistened with polyethylene glycol. Non-dusty coated granules are obtained in this manner.

| Suspension concentrate | |
|---|---|
| active ingredient (I : comp B) = 1:8) | 40 % |
| propylene glycol | 10 % |
| nonylphenol polyethylene glycol ether (15 mol of ethylene oxide) | 6 % |
| sodium lignosulfonate | 10 % |
| carboxymethylcellulose | 1 % |
| silicone oil (in the form of a 75 % emulsion in water) | 1 % |
| water | 32 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Slow Release Capsule Suspension

28 parts of a combination of the compound of formula I and a compound of component B), or of each of these compounds separately, are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed.

The obtained capsule suspension is stabilized by adding 0.25 parts of a thickener and 3 parts of a dispersing agent. The capsule suspension formulation contains 28% of the active ingredients. The medium capsule diameter is 8-15 microns.

The resulting formulation is applied to seeds as an aqueous suspension in an apparatus suitable for that purpose.

Biological Examples

A synergistic effect exists whenever the action of an active ingredient combination is greater than the sum of the actions of the individual components.

The action to be expected E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per liter of spray mixture
X = % action by active ingredient I using p ppm of active ingredient
Y = % action by active ingredient II using q ppm of active ingredient.

According to COLBY, the expected (additive) action of active ingredients A)+B) using p+q ppm of active ingredient is

$$E = X + Y - \frac{X \cdot Y}{100}$$

If the action actually observed (O) is greater than the expected action (E), then the action of the combination is super-additive, i.e. there is a synergistic effect. In mathematical terms the synergism factor SF corresponds to O/E. In the agricultural practice an SF of ≥ 1.2 indicates significant improvement over the purely complementary addition of activities (expected activity), while an SF of ≤ 0.9 in the practical application routine signals a loss of activity compared to the expected activity.

Alternatively the synergistic action may also be determined from the dose response curves according to the so-called WADLEY method. With this method the efficacy of the a.i. is determined by comparing the degree of fungal

attack on treated plants with that on untreated, similarly inoculated and incubated check plants. Each a.i. is tested at 4 to 5 concentrations. The dose response curves are used to establish the EC90 (i.e. concentration of a.i. providing 90% disease control) of the single compounds as well as of the combinations (EC $90_{observed}$). The thus experimentally found values of the mixtures at a given weight ratio are compared with the values that would have been found were only a complementary efficacy of the components was present (EC 90 $(A+B)_{expected}$). The EC 90 $(A+B)_{expected}$ is calculated according to Wadley (Levi et al., EPPO- Bulletin 16, 1986, 651-657):

$$EC\ 90\ (A+B)_{expected} = \frac{a+b}{\frac{a}{EC90\ (A)_{observed}} + \frac{b}{EC90\ (B)_{observed}}}$$

wherein a and b are the weight ratios of the compounds A and B in the mixture and the indexes (A), (B), (A+B) refer to the observed EC 90 values of the compounds A, B or the given combination A+B thereof. The ratio EC90 $(A+B)_{expected}$ / EC90 $(A+B)_{observed}$ expresses the factor of interaction, the synergy factor (SF). In case of synergism, SF is >1.

Example B-1: Action against Plasmopara viticola on grapes

5 week old grape seedlings cv. Gutedel are treated with the formulated test mixture in a spray chamber. One day after application of the active ingredients and of the mixture of active ingredients the grape plants are inoculated by spraying a sporangia suspension (4 x $10^4$ sporangia/ml) of *Plasmopara viticola* on the lower leaf side of the test plants. After an incubation period of 6 days at +21 °C and 95% r. h. in a greenhouse the disease incidence is assessed. The fungicide interactions in the mixtures are calculated according to COLBY method.

Example B-2: Activity against Plasmopara viticola on grape (cv Gutedel) leaf discs

The efficacy of the mixtures against *Plasmopara viticola* may be determined in micro scale on grape leaf discs in 24-well plates (repeated on 4 discs per variation).
The solo compounds of formula I and of components B) and the mixtures are protectively applied on the lower leaf side of leaf discs laying on 0.2% water agar one day prior to inoculation. The inoculation is done by spraying the sporangial suspension (70'000 sp/ml) on the lower leaf side. The infected (sporulating) area of each leaf disc is measured 7-8 days after incubation (under standard conditions in a climatic chamber +18°C, 12 hours day/night cycle) as a %-value of the total leaf disc area. The activity is calculated as a %-value relative to the disease rate on fully infected, untreated grape leave discs. The expected fungicide interactions of the components in the mixtures (E-values) are calculated according to the method of Colby.

Results:

| Component A (in ppm) compound 1.14 | Component B (in ppm) compound IIa | mixing ratio (A : B) | observed activity (O in %) | expected activity (E in %) | Synergy factor (SF) |
|---|---|---|---|---|---|
| 0.1 | | | 36 | | |
| 0.05 | | | 18 | | |
| | 0.1 | | 9 | | |
| | 0.05 | | 5 | | |
| | 0.025 | | 3 | | |
| 0.1 | 0.1 | 1:1 | 69 | 42 | 1.7 |
| 0.05 | 0.05 | 1:1 | 36 | 22 | 1.6 |
| 0.1 | 0.5 | 1:5 | 84 | 48 | 1.7 |
| 0.05 | 0.25 | 1:5 | 41 | 24 | 1.7 |
| 0.05 | 0.5 | 1:10 | 71 | 34 | 2.1 |

| Component A (in ppm) compound 1.14 | Component B (in ppm) compound IV | mixing ratio (A : B) | observed activity (O in %) | expected activity (E in %) | Synergy factor (SF) |
|---|---|---|---|---|---|
| 0.05 | | | 18 | | |
| | 0.5 | | 15 | | |
| | 0.25 | | 3 | | |
| 0.05 | 0.25 | 1:5 | 27 | 21 | 1.3 |
| 0.05 | 0.5 | 1:10 | 53 | 30 | 17 |

| Component A (in ppm) compound 1.14 | Component B (in ppm) compound VIa | mixing ratio (A : B ) | observed activity (O in %) | expected activity (E in %) | Synergy factor (SF) |
|---|---|---|---|---|---|
| 0.1 | | | 36 | | |
| 0.05 | | | 18 | | |
| 0.01 | | | 10 | | |
| | 0.01 | | 0 | | |
| 0.05 | 0.01 | 5:1 | 24 | 18 | 1.3 |
| 0.01 | 0.01 | 1:1 | 22 | 10 | 2.1 |
| 0.1 | 0.01 | 1:10 | 47 | 36 | 1.3 |

| Component A (in ppm) compound 1.14 | Component B (in ppm) compound IX | mixing ratio (A : B) | observed activity (O in %) | expected activity (E in %) | Synergy factor (SF) |
|---|---|---|---|---|---|
| 0.1 | | | 36 | | |
| 0.05 | | | 18 | | |
| 0.01 | | | 10 | | |
| | 1 | | 62 | | |
| | 0.05 | | 14 | | |
| | 0.01 | | 0 | | |
| 0.05 | 0.01 | 5:1 | 22 | 18 | 1.2 |
| 0.05 | 0.05 | 1:1 | 50 | 29 | 1.7 |
| 0.01 | 0.01 | 1:1 | 22 | 10 | 2.2 |
| 0.1 | 1 | 1:10 | 91 | 76 | 1.2 |

| Component A (in ppm) compound 1.14 | Component B (in ppm) compound XI | mixing ratio (A : B) | observed activity (O in %) | expected activity (E in %) | Synergy factor (SF) |
|---|---|---|---|---|---|
| 0.25 | | | 36 | | |
| 0.05 | | | 18 | | |
| | 0.025 | | 8 | | |
| | 0.01 | | 0 | | |

(continued)

| Component A (in ppm) compound 1.14 | Component B (in ppm) compound XI | mixing ratio (A : B) | observed activity (O in %) | expected activity (E in %) | Synergy factor (SF) |
|---|---|---|---|---|---|
| 0.25 | 0.025 | 10:1 | 81 | 64 | 1.3 |
| 0.05 | 0.01 | 5:1 | 2436 | 18 | 1.3 |

Similar results are obtained with the other components B). Likewise with the other compounds of formula I , e.g. I.01, I.11, I.12, I.13, I.15, I.17, I.19, I.20, I.21, and I.22 in combinations with the compounds of component B) similar results are obtained.

Example B-3: Activity aqainst Uncinula necator on grapes

Grape plants in the 4-6 leaf stage, variety Gutedel, are inoculated with conidia of *Uncinula necator* by dusting the conidia over the test plants. After 2 days under high humidity and reduced light intensity, the plants are incubated for 10-14 days in a growth chamber at 70% r. h. and +22°C. 3 days after inoculation the active ingredients and the mixtures are applied by spraying aqueous suspensions being prepared by suspending the a.i.s in demineralized water and appropriate dilution. 5 plants are used for every treatment. 12 days after inoculation the tests are evaluated by estimating the percentage of fungal leaf attack relative to the disease on the check plants. The fungicide interactions in the mixtures are calculated according to COLBY method.

Example B-4: Activity against Phytophthora infestans in tomatoes

a) Curative action

Tomato plants cv. "Roter Gnom" are grown for three weeks and then sprayed with a zoospore suspension of the fungus and incubated in a cabin at +18 to +20°C and saturated atmospheric humidity. The humidification is interrupted after 24 hours. After the plants have dried, they are sprayed with a mixture which comprises the active ingredients formulated as a wettable powder at a concentration of 200 ppm. After the spray coating has dried, the plants are returned to the humid chamber for 4 days. Number and size of the typical foliar lesions which have appeared after this time are used as a scale for assessing the efficacy of the test substances.

b) Preventive-systemic action

The active ingredient which is formulated as a wettable powder is introduced, at a concentration of 60 ppm (relative to the soil volume), onto the soil surface of three-week-old tomato plants cv. "Roter Gnom" in pots. After an interval of three days, the underside of the leaves is sprayed with a zoospore suspension of Phytophthora infestans. They are then kept for 5 days in a spray cabinet at +18 to +20°C and saturated atmospheric humidity. After this time, typical foliar lesions appear whose number and size are used for assessing the efficacy of the test substances.

Example B-5: Activity against Phytophthora on potato plants

a) Residual-protective action

2-3 week old potato plants (Bintje variety) are grown for 3 weeks and then sprayed with a spray mixture (0.02% of active ingredient) prepared with a wettable powder of the active ingredients. After 24 hours, the treated plants are infected with a sporangia suspension of the fungus. The fungus infestation is assessed after the infected plants have been incubated for 5 days at a relative atmospheric humidity of 90-100% and +20°C.

b) Systemic action

A spray mixture (0.002% of active ingredients based on the soil volume) prepared with a wettable powder of the active ingredients is poured to the soil next to 2-3 week old potato plants (Bintje variety) which have been grown for 3 weeks. Care is taken that the spray mixture does not come into contact with the aerial parts of the plants. After 48 hours, the treated plants are infected with a sporangia suspension of the fungus. Fungus infestation is assessed

after the infected plants have been incubated for 5 days at a relative atmospheric humidity of 90-100% and +20°C.

Example B-6: Activity against Phytophthora infestans on potato (cv. Bintje) leaf discs

The efficacy of the mixtures against *Phytophthora infestans* may be determined in micro scale on potato leaf discs in 24-well plates (repeated on 4 discs per variation).
The solo compounds and the mixtures are protectively applied on the lower leaf side of leaf discs laying on 0.2% water agar one day prior to inoculation. The inoculation is done with one droplet (30 μl) per disc of the sporangial suspension (50'000 sp./ml). The infected (sporulating) area of each leaf disc is measured 6 days after incubation (under standard conditions in a climatic chamber +18°C, 12 hours day/night cycle) as a %-value of the total leaf disc area. The activity is calculated as a %-value relative to the disease rate on fully infected, untreated potato leave discs.
The expected fungicide interactions of the components in the mixtures (E-values) are calculated according to the method of Colby.

Results:

| Component A (in ppm) compound 1.14 | Component B (in ppm) compound III | mixing ratio (A : B) | observed activity (O in %) | expected activity (E in %) | Synergy factor (SF) |
|---|---|---|---|---|---|
| 0.05 | | | 11 | | |
| 0.025 | | | 0 | | |
| 0.01 | | | 1 | | |
| | 0.5 | | 29 | | |
| | 0.05 | | 0 | | |
| | 0.025 | | 0 | | |
| 0.05 | 0.05 | 1:1 | 26 | 11 | 2.3 |
| 0.025 | 0.025 | 1:1 | 6 | 0 | 5.7 |
| 0.05 | 0.25 | 1:5 | 66 | 34 | 1.9 |
| 0.01 | 0.05 | 1:5 | 9 | 1 | 9.0 |
| 0.05 | 0.5 | 1:10 | 66 | 37 | 1.8 |

| Component A (in ppm) compound 1.14 | Component B (in ppm) compound V | mixing ratio (A : B ) | observed activity (O in %) | expected activity (E in %) | Synergy factor (SF) |
|---|---|---|---|---|---|
| 0.05 | | | 11 | | |
| | 0.5 | | 0 | | |
| 0.05 | 0.5 | 1:10 | 14 | 11 | 1.3 |

| Component A (in ppm) compound 1.14 | Component B (in ppm) compound VIII | mixing ratio (A : B) | observed activity (O in %) | expected activity (E in %) | Synergy factor (SF) |
|---|---|---|---|---|---|
| 0.025 | | | 0 | | |
| 0.25 | | | 0 | | |
| 0.025 | 0.25 | 1:10 | 3 | 0 | 2.9 |

Similar results are obtained with the other components B). Likewise with the other compounds of formula I , e.g. I.01, I.11, I.12, I.13, I.15, I.17, I.19, I.20, I.21, and I.22 in combinations with the compounds of component B) similar results are obtained.

Example B-7: Action against Monilinia fructigena on apples

Mature ripe fruit of a susceptible apple cultivar are treated with the formulated test mixture in a spray chamber. One day after application of the active ingredients and of the mixture of active ingredients the apples are inoculated by spraying a spore suspension (4 x $10^4$ spores/ml) of *Monilinia fructigena* directly onto the test apples . After an incubation period of 7-14 days at +21 °C and 95% r. h. in a growth chamber the disease incidence and severity is assessed. The fungicide interactions in the mixtures are calculated according to COLBY method.

Example B-8: Activity against Penicillium expansum on apples

Mature ripe fruit of a susceptible apple cultivar are treated with the formulated test mixture in a spray chamber. One day after application of the active ingredients and of the mixture of active ingredients the apples are inoculated with conidia of *Penicillium expansum* by spraying a suspension of conidia onto the test apples. After an incubation period of 7-14 days in a growth chamber at 70% r. h. and +22°C the disease incidence and severity is assessed. The fungicide interactions in the mixtures are calculated according to COLBY method.

Example B-9: Activity against Phlyctaena vagabunda on apples

Mature ripe fruit of a susceptible apple cultivar are treated with the formulated test mixture in a spray chamber. One day after application of the active ingredients and of the mixture of active ingredients the apples are inoculated with conidia of *Phlyctaena vagabunda* by spraying a suspension of conidia onto the test apples. After an incubation period of 7-14 days in a growth chamber at 70% r. h. and +22°C the disease incidence and severity is assessed. The fungicide interactions in the mixtures are calculated according to COLBY method.

Example B-10: Activity against Colletotrichum musae on banana

Mature ripe bananas are treated with the formulated test mixture in a spray chamber. One day after application of the active ingredients and of the mixture of active ingredients the apples are inoculated with conidia of *Colletotrichum musae* by spraying a suspension of conidia onto the test bananas. After an incubation period of 7-14 days in a growth chamber at 70% r. h. and +22°C the disease incidence and severity is assessed. The fungicide interactions in the mixtures are calculated according to COLBY method.

Example B-11: Activity against Fusarium moniliforme on banana

Mature ripe bananas are treated with the formulated test mixture in a spray chamber. One day after application of the active ingredients and of the mixture of active ingredients the apples are inoculated with conidia of *Fusarium moniliforme* by spraying a suspension of conidia onto the test bananas. After an incubation period of 7-14 days in a growth chamber at 70% r. h. and +22°C the disease incidence and severity is assessed. The fungicide interactions in the mixtures are calculated according to COLBY method.

Example B-12: Activity against Penicillium digitatum on citrus

Mature ripe fruit of a susceptible orange cultivar are treated with the formulated test mixture in a spray chamber. One day after application of the active ingredients and of the mixture of active ingredients the apples are inoculated with conidia of *Penicillium digitatum* by spraying a suspension of conidia onto the test apples. After an incubation period of 7-14 days in a growth chamber at 70% r. h. and +22°C the disease incidence and severity is assessed. The fungicide interactions in the mixtures are calculated according to COLBY method.

The mixtures according to the invention exhibit good activity in all of the above Examples, where no individually specified data are reported.

**Claims**

1. A method of combating phytopathogenic diseases on crop plants which comprises applying to the crop plants or

the locus thereof being infested with said phytopathogenic disease an effective amount of a combination of

A) a N-sulfonyl-valine-amide of formula I

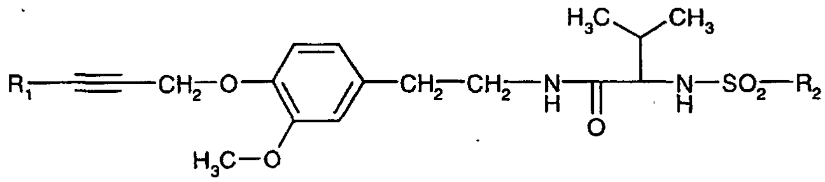 (I)

wherein
$R_1$ is hydrogen, $C_{1-4}$alkyl, $C_{3-6}$cycloalkyl or halophenyl, and
$R_2$ is $C_{1-4}$alkyl;
in association with
B) metalaxyl of formula II, including metalaxyl-M of formula IIa

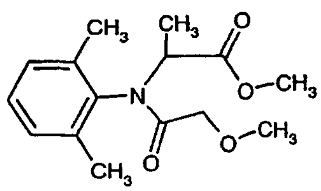 (II) , 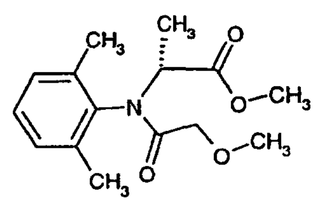 (IIa) ,

or
fluazinam of formula III

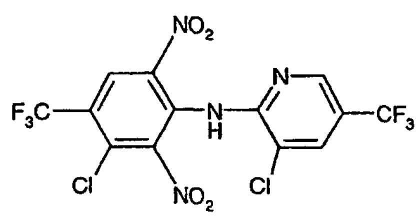 (III) ,

or
mancozeb of formula IV

$$[\text{-SCSNHCH}_2\text{CH}_2\text{NHCSSMn-}]_x[\text{Zn}\}_y \quad \text{(IV)},$$

or
chlorothalonil of formula V

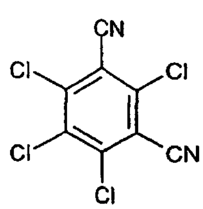 (V) ,

or
a strobilurin of the formula VI

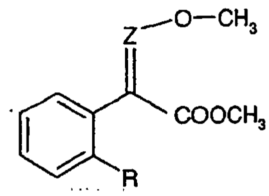

(VI)

wherein Z is CH or N and R is

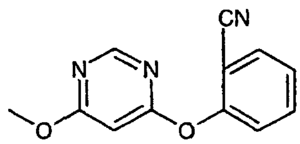

,

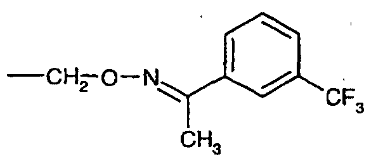

or

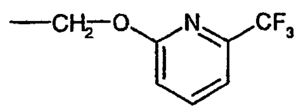

,

especially of the
strobilurins of formulae VIa, VIb or VIc

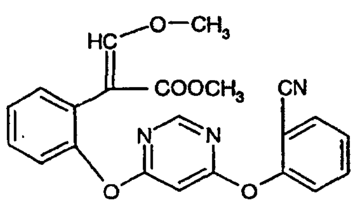

(VIa) azoxystrobin

,

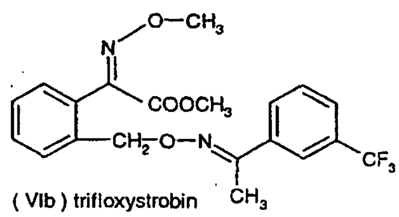

(VIb) trifloxystrobin

,

and

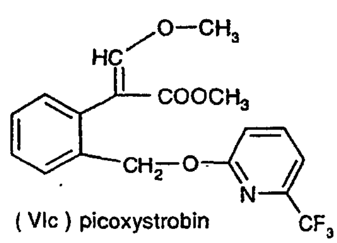

(VIc) picoxystrobin

,

or
the compound pyraclostrobin (BAS 500F) of the formula VII

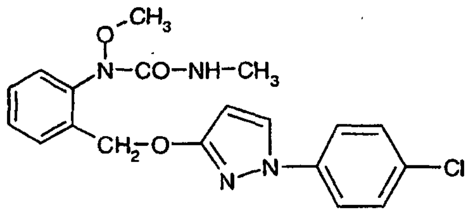

(VII) ,

or
acibenzolar-S-methyl of the formula VIII

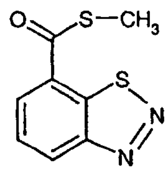

(VIII) ,

or
dimethomorph of the formula IX

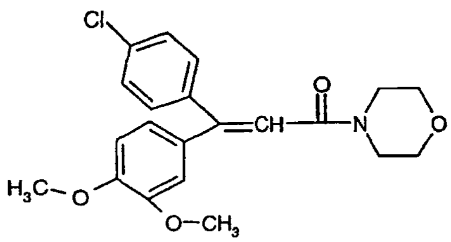

(IX) ,

or
fludioxonil of formula X

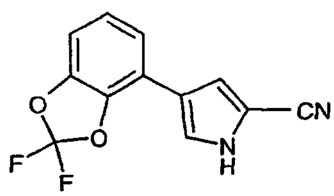

(X) ,

or
cymoxanil of the formula XI

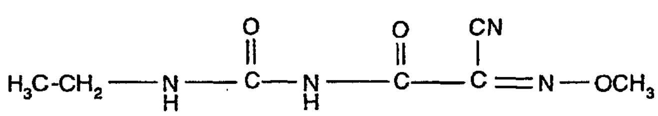

(XI) ,

, or
imazalil of the formula XII, including S-imazalil of formula XIIa

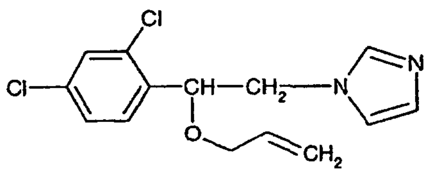 ( XII ), 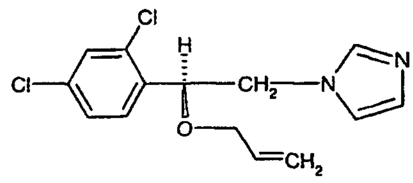 ( XIIa )

2. A method according to claim 1 wherein the component A) comprises a compound of the formula I wherein $R_1$ is hydrogen, methyl, ethyl, chlorophenyl or bromophenyl, or wherein $R_1$ is hydrogen, ethyl, 4-chlorophenyl or 4-bromophenyl, or wherein $R_1$ is 4-chlorophenyl, or wherein $R_2$ is methyl or ethyl, or wherein $R_2$ is methyl, or wherein $R_1$ is hydrogen, ethyl, 4-chlorophenyl or 4-bromophenyl, and $R_2$ being methyl or ethyl, or wherein $R_1$ is 4-chlorophenyl and $R_2$ is methyl or ethyl.

3. A method according to claim 1 or 2 wherein the component B) is selected from the group comprising acibenzolar-S-methyl, azoxystrobin, chlorothalonil, cymoxanil, dimethomorph, fluazinam, fludioxonil, imazalil, S-imazalil, mancozeb, metalaxyl, metalaxyl-M, picoxystrobin, pyraclostrobin (BAS 500F) and trifloxystrobin.

4. A method according to claims 1 or 2 wherein the component B) is metalaxyl or metalaxyl-M.

5. A method according to any one of clams 1 to 4 wherein component A) is selected from a group comprising compounds I.01, I.11, I.12, I.13, I.14, I.15, I.17, I.19, I.20, I.21, and I.22.

6. A method according to claim 5 wherein component A) is compound I.13, or is compound I.14, or is compound I. 15, or is compound I.17, or is compound I.19, or is compound I.20, or is compound I.21.

7. A fungicidal composition comprising a fungicidally effective combination of components A) and B) according to claim 1 together with an agriculturally acceptable carrier, and optionally a surfactant.

8. A composition according to claim 7 wherein the weight ratio of A) to B) is between 2000 : 1 and 1 : 1000.

**Patentansprüche**

1. Verfahren zum Bekämpfen phytopathogener Krankheiten auf Kulturpflanzen, umfassend das Auftragen auf die Kulturpflanzen oder deren Stelle, die mit dieser phytopathogenen Krankheit befallen ist, einer wirksamen Menge einer Kombination aus

A) einem N-Sulfonyl-valin-amid der Formel I

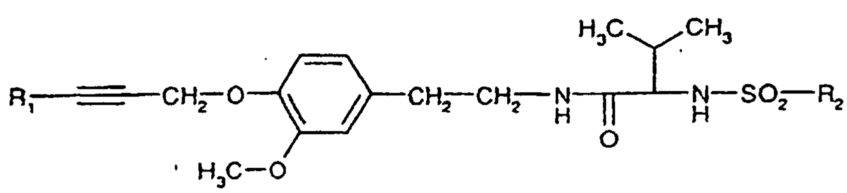 ( I )

worin
$R_1$ Wasserstoff, $C_{1-4}$Alkyl, $C_{3-6}$Cycloalkyl oder Halophenyl ist, und
$R_2$ $C_{1-4}$Alkyl ist;
zusammen mit
B) Metalaxyl der Formel II, einschließlich Metalaxyl-M der Formel IIa

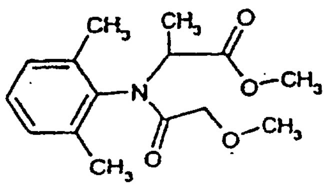 (II), 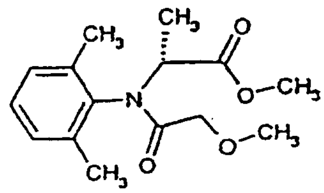 (IIa),

oder
Fluazinam der Formel III

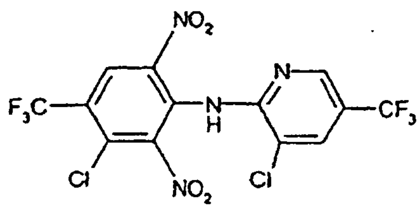 (III),

oder
Mancozeb der Formel IV

$$[\,\text{-SCSNHCH}_2\text{CH}_2\text{NHCSSMn-}\,]_x\,[\,\text{Zn}\,]_y \quad (\text{IV}) \qquad (\text{IV}),$$

oder
Chlorothalonil der Formel V

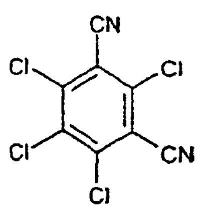 (V),

oder ein Strobilurin der Formel VI

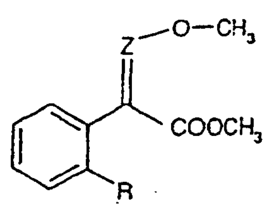 (VI)

worin Z CH oder N ist und R

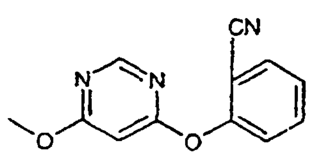 ,

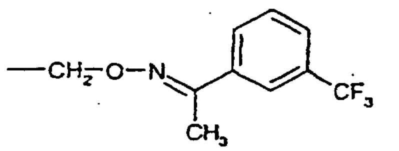 oder 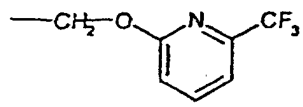

ist, insbesondere der Strobilurine der Formeln VIa, VIb oder VIc

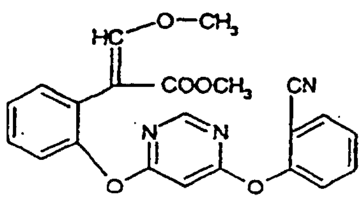 , 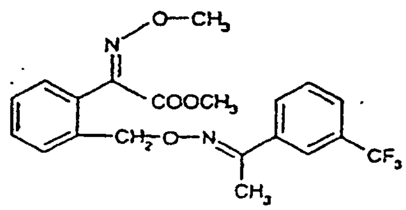

(VIa) Azoxystrobin (VIb) Trifloxystrobin

und

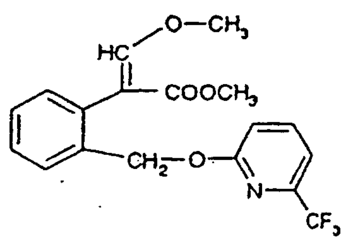 ,

oder (VIc) Picoxystrobin
die Verbindung Pyraclostrobin (BAS 500F) der Formel VII

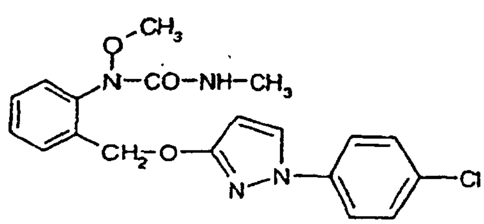 ( VII ) ,

oder
Acibenzolar-S-methyl der Formel VIII

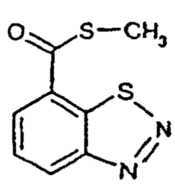 ( VIII ) ,

oder
Dimethomorph der Formel IX

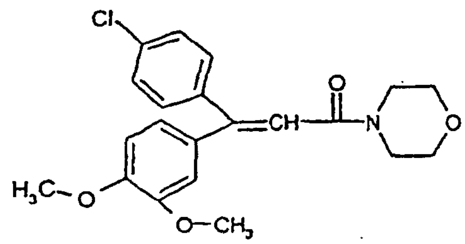

(IX) ,

oder Fludioxonil der Formel X

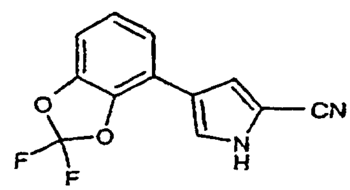

(X) ,

oder Cymoxanil der Formel XI

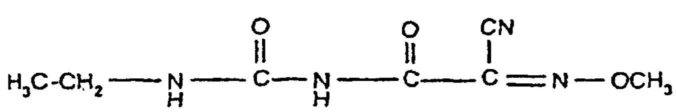

(XI) ,

oder
Imazalil der Formel XII, einschließlich S-Imazalil der Formel XIIa

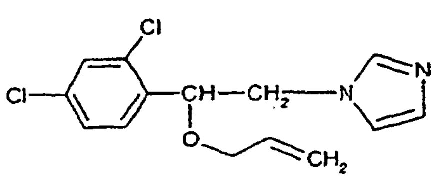

(XII),

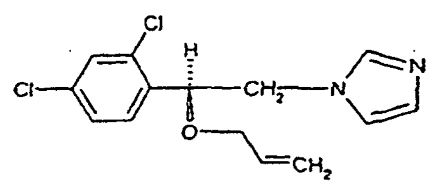

(XIIa)

**2.** Verfahren nach Anspruch 1, wobei die Komponente A) eine Verbindung der Formel I umfaßt, worin $R_1$ Wasserstoff, Methyl, Ethyl, Chlorphenyl oder Bromphenyl ist, oder worin $R_1$ Wasserstoff, Ethyl, 4-Chlorphenyl oder 4-Bromphenyl ist, oder worin $R_1$ 4-Chlorphenyl ist, oder worin $R_2$ Methyl oder Ethyl ist, oder worin $R_2$ Methyl ist, oder worin $R_1$ Wasserstoff, Ethyl, 4-Chlorphenyl oder 4-Bromphenyl ist, und $R_2$ Methyl oder Ethyl ist, oder worin $R_1$ 4-Chlorphenyl und $R_2$ Methyl oder Ethyl ist.

**3.** Verfahren nach Anspruch 1 oder 2, wobei die Komponente B) aus der Gruppe, umfassend Acibenzolar-S-methyl, Azoxystrobin, Chlorthalonil, Cymoxanil, Dimethomorph, Fluazinam, Fludioxonil, Imazalil, S-Imazalil, Mancozeb, Metalaxyl, Metalaxyl-M, Picoxystrobin, Pyraclostrobin (BAS 500F) und Trifloxystrobin, ausgewählt ist.

**4.** Verfahren nach Anspruch 1 oder 2, wobei die Komponente B) Metalaxyl oder Metalaxyl-M ist.

**5.** Verfahren nach einem der Ansprüche 1 bis 4, wobei die Komponente A) aus einer Gruppe, umfassend Verbindungen I.01, I.11, I.12, I.13, I.14, I.15, I.17, I.19, I.20, I.21 und I.22, ausgewählt ist.

**6.** Verfahren nach Anspruch 5, wobei die Komponente A) Verbindung I.13 oder Verbindung I.14 oder Verbindung I. 15 oder Verbindung I.17 oder Verbindung I.19 oder Verbindung I.20 oder Verbindung I.21 ist.

**7.** Fungizide Zusammensetzung, umfassend eine fungizid wirksame Kombination aus den Komponenten A) und B)

nach Anspruch 1 zusammen mit einem landwirtschaftlich akzeptablen Träger und gegebenenfalls einem grenzflächenaktiven Mittel.

**8.** Zusammensetzung nach Anspruch 7, wobei das Gewichtsverhältnis von A) zu B) zwischen 2000 : 1 und 1 : 1000 liegt.

## Revendications

**1.** Procédé de lutte contre les maladies phytopathogènes sur des plantes cultivées qui comprend l'application, sur des plantes cultivées ou leur foyer infestés par ladite maladie phytopathogène, d'une quantité efficace d'une combinaison de

A) un N-sulfonyl-valine-amide répondant à la formule I

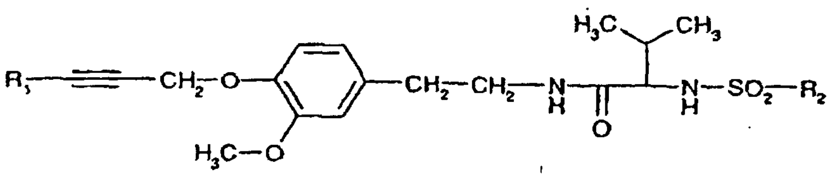

(I)

dans laquelle

$R_1$ représente un atome d'hydrogène, un groupe alkyle en $C_{1-4}$, un groupe cycloalkyle (en $C_{3-6}$) ou halophényle, et $R_2$ représente un groupe alkyle en $C_{1-4}$ ;

en association avec

B) le métalaxyl répondant à la formule II, y compris le métalaxyl-M répondant à la formule IIa

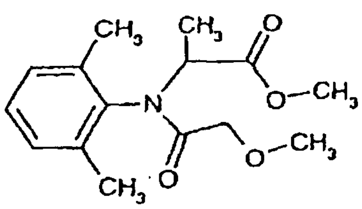

(II),

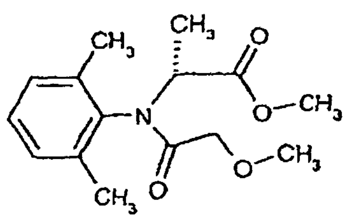

(IIa),

ou le fluazinam répondant à la formule III

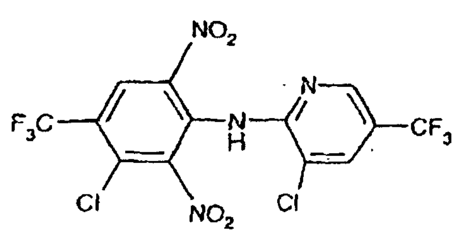

(III),

ou le mancozèbe répondant à la formule IV

$$[\text{-SCSNHCH}_2\text{CH}_2\text{NHCSSMn-}]_x[\text{Zn}]_y \qquad \text{(IV)},$$

ou le chlorothalonil répondant à la formule V

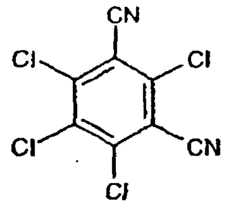 (V) .

ou une strobilurine répondant à la formule VI

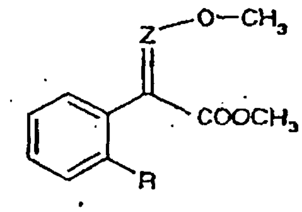 (VI)

dans laquelle Z représente un groupe CH ou un atome N et R représente

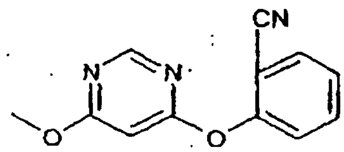 ,

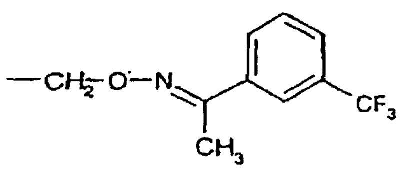 ou 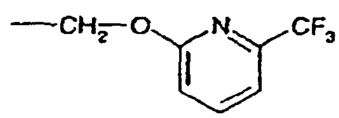

en particulier, les strobilurines répondant aux formules VIa, VIb ou VIc

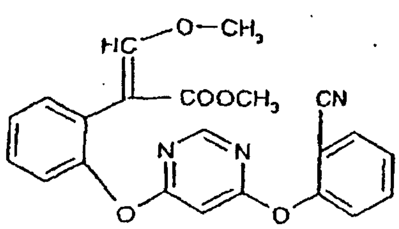 , 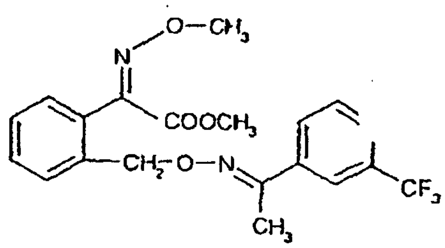

(VIa) azoxystrobine (VIb) trifloxystrobine

et

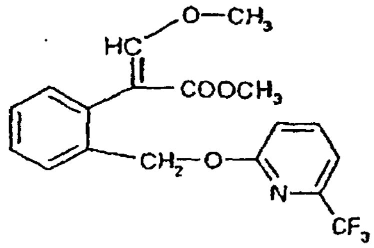

,

(VIc) picoxystrobine

ou le composé pyraclostrobine (BAS 500F) répondant à la formule VII

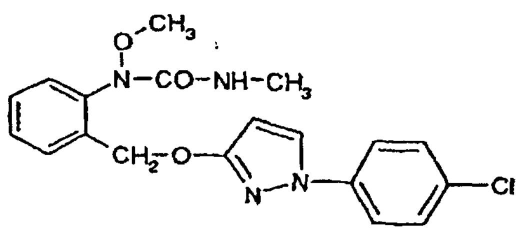

(VII),

ou l'acibenzolar-S-méthyl répondant à la formule VIII

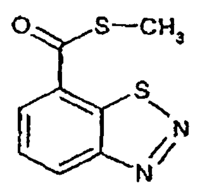

(VIII),

ou le diméthomorphe répondant à la formule IX

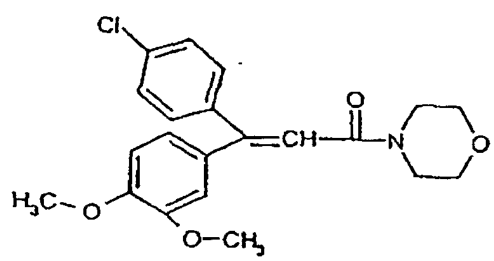

(IX),

ou le fludioxonil répondant à la formule X

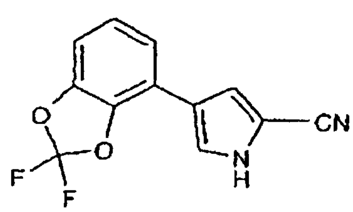

(X),

ou le cymoxanil répondant à la formule XI

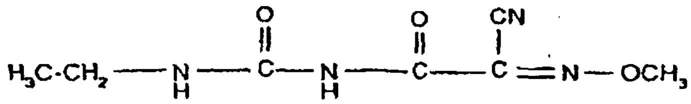

( XI ) ,

ou l'imazalil répondant à la formule XII, y compris le S-imazalil répondant à la formule XIIa

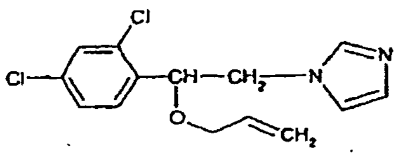

( XII ),

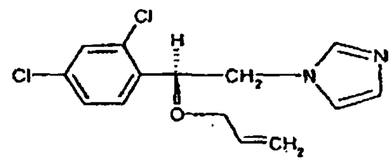

( XIIa )

**2.** Procédé selon la revendication 1, dans lequel le composant A) comprend un composé répondant à la formule I, dans laquelle $R_1$ représente un atome d'hydrogène, un groupe méthyle, un groupe éthyle, un groupe chlorophényle ou un groupe bromophényle, ou dans laquelle $R_1$ représente un atome d'hydrogène, un groupe éthyle, un groupe 4-chlorophényle ou un groupe 4-bromophényle, ou dans laquelle $R_1$ représente un groupe 4-chlorophényle, ou dans laquelle $R_2$ représente un group méthyle ou un groupe éthyle, ou dans laquelle $R_2$ représente un groupe méthyle, ou dans laquelle $R_1$ représente un atome d'hydrogène, un groupe éthyle, un groupe 4-chlorophényle ou un groupe 4-bromophényle, et $R_2$ représentant un groupe méthyle ou un groupe éthyle, ou dans laquelle $R_1$ représente un groupe 4-chlorophényle et $R_2$ représente un groupe méthyle ou un groupe éthyle.

**3.** Procédé selon la revendication 1 ou 2, dans lequel le composant B) est choisi à dans le groupe comprenant l'acibenzolar-S-méthyl, l'azoxystrobine, le chlorothalonil, le cymoxanil, le diméthomorphe, le fluazinam, le fludioxonil, l'imazalil, le S-imazalil, le mancozèbe, le métalaxyl, le métalaxyl-M, la picoxystrobine, la pyraclostrobine (BAS 500F) et la trifloxystrobine.

**4.** Procédé selon la revendication 1 ou 2, dans lequel le composant B) est le métalaxyl ou le métalaxyl-M.

**5.** Procédé selon l'une quelconque des revendications 1 à 4, dans lequel le composant A) est choisi dans un groupe comprenant les composés I.01, I.11, I.12, I.13, I.14, I.15, I.17, I.19, I.20, I.21 et I.22.

**6.** Procédé selon la revendication 5, dans lequel le composant A) est le composé I.13, ou est le composé I.14, ou est le composé I.15, ou est le composé I.17, ou est le composé I.19, ou est le composé I.20 ou est le composé I.21.

**7.** Composition fongicide comprenant une combinaison efficace du point de vue fongicide des composants A) et B) selon la revendication 1 avec un vecteur acceptable du point de vue agricole et, éventuellement, un surfactant.

**8.** Composition selon la revendication 7, dans laquelle le rapport en poids de A) à B) se situe entre 2000:1 et 1:1000.